# EUROPEAN PATENT APPLICATION

(11) **EP 4 106 446 A1**
(43) Date of publication of application: **21.12.2022**
(21) Application number: 20919320.0
(22) Date of filing: 14.02.2020
(51) Int. Cl.: H04W 72/04

(54) **TERMINAL AND WIRELESS COMMUNICATION METHOD**

(71) Applicant: NTT DOCOMO, INC., Chiyoda-Ku Tokyo 100-6150 (JP)
(72) Inventor: TAKAHASHI Hideaki, Tokyo 100-6150 (JP); MIN Tianyang, Tokyo 100-6150 (JP); WANG Lihui, Beijing 100190 (CN); HOU Xiaolin, Beijing 100190 (CN)
(74) Representative: Hoffmann Eitle
(86) International application number: PCT/JP2020/005885
(87) International publication number: WO 2021/161529

(57) **Abstract**

A terminal includes: a receiving unit that receives an information element that indicates at least any one of activation and release of at least one granted configuration via a physical downlink control channel when configured grants for a plurality of cells are configured in one cell group; and a transmitting unit that transmits configured grant confirmation for a plurality of cells in response to receiving the information element via the physical downlink control channel.

## Description

### Technical Field

The present invention relates to a terminal and a radio communication method.

### Background Art

The 3rd Generation Partnership Project (3GPP) specifies Long Term Evolution (LTE), and with the aim of further speeding of LTE, has also specified LTE-Advanced (hereinafter, referred to as LTE including the LTE-Advanced), and the 5th generation mobile communication system (hereinafter, also called 5G, New Radio (NR), or Next Generation(NG)). Furthermore, mobile communication systems of 5G and beyond have been specified (sometimes called 6G and beyond 5G, but not limited to these names).

In LTE and NR, there is known a scheduling system (configured grant) in which PUSCH (Physical Uplink Shared Channel) resources transmitted from a UE to a base station are allocated in advance. Although a single configured grant for at most one cell in one cell group is supported in Release 15, multiple configured grants for multiple cells in one cell group are supported in Release 16.

Regarding the configured grant, there is known a mechanism (configured grant Type 2) in which a configured grant is configured by RRC (Radio Resource Control) and the configured grant is activated or released by a PDCCH (Physical Downlink Control Channel). In the configured grant Type 2, a UE transmits configured grant confirmation to a base station. Configured grant confirmation for one cell is specified in the single configured grant, and introduction of configured grant confirmation for multiple cells is agreed in multiple configured grants (for example, Non Patent Documents 1 and 2).

### Citation List

### Non Patent Literature

Non Patent Literature 1: 3GPP TS38.321 v15.8.0
Non Patent Literature 2: "MAC Running CR for NR HOT", R2-1916352, 3GPP TSG-RAN2 Meeting #108, November 2019

### Summary of Invention

In the technology described above, only the introduction of the configured grant confirmation for multiple cells is agreed, and it is necessary to consider when to send the configured grant confirmation for multiple cells.

A terminal according to a first aspect includes: a receiving unit that receives an information element that indicates at least any one of activation and release of at least one granted configuration via a physical downlink control channel when configured grants for a plurality of cells are configured in one cell group; and a transmitting unit that transmits configured grant confirmation for a plurality of cells in response to receiving the information element via the physical downlink control channel.

A radio communication method according to a second aspect includes: a step of receiving an information element that indicates at least any one of activation and release of at least one granted configuration via a physical downlink control channel when configured grants for multiple cells are configured in one cell group; and a step of transmitting configured grant confirmation for multiple cells in response to receiving the information element via the physical downlink control channel.

### Brief Description of Drawings

Fig. 1 is an overall schematic configuration diagram of a radio communication system 10.
Fig. 2 is a diagram illustrating a UE 200 according to an embodiment.
Fig. 3 is a diagram illustrating a base station 300 according to the embodiment.
Fig. 4 is a view for describing an LCID according to the embodiment.
Fig. 5 is a view for describing multiple configured grant confirmation according to the embodiment.
Fig. 6 is a view for describing an Operation Example 1 according to the embodiment.
Fig. 7 is a view for describing Operation Example 2 according to the embodiment.
Fig. 8 is a view for describing Operation Example 1 according to a first modification.
Fig. 9 is a view for describing Operation Example 2 according to the first modification.
Fig. 10 is a view for describing an operation example according to a second modification.
Fig. 11 is a view for describing Operation Example 1 according to a third modification.
Fig. 12 is a view for describing Operation Example 2 according to the third modification.
Fig. 13 is a diagram illustrating an example of a hardware configuration of the UE 200 or the base station 300 according to the embodiment.

### Description of Embodiments

Hereinafter, an embodiment will be described with reference to the drawings. Note that the same functions and configurations are denoted by the same or similar reference signs, and the description thereof will be omitted as appropriate.

### (Embodiment)

### (1) Overall schematic configuration of radio communication system

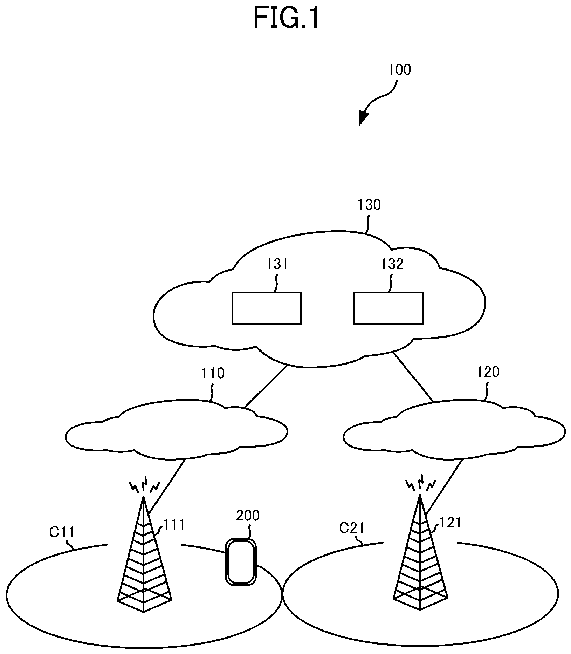

Fig. 1 is an overall schematic configuration diagram of a radio communication system 100 according to an embodiment. The radio communication system 100 is a radio communication system according to Long Term Evolution (LTE) and 5G New Radio (NR). Note that LTE may be called 4G, and NR may be called 5G. LTE and NR may also be interpreted as Radio Access Technology (RAT). In the embodiment, LTE may be called a first radio access technology and NR may be called a second radio access technology. NR may be considered to include radio access technologies of 5G and beyond.

The radio communication system 100 includes an Evolved Universal Terrestrial Radio Access Network 110 (hereinafter, E-UTRAN 110), a Next Generation-Radio Access Network 120 (hereinafter, NG RAN 120), and a core network 130. The radio communication system 100 includes a terminal 200.

The E-UTRAN 110 includes an eNB 111 that is a base station according to LTE. The eNB 111 has one or more cells C11. The E-UTRAN110 may include two or more eNBs 111.

The NG RAN 120 includes a gNB 121 that is a base station according to 5G (NR). The gNB 121 has one or more cells C21. The NG RAN 120 may include two or more gNBs 121.

The term "cell" may be used to mean a function provided in the eNB 111 or the gNB 121, that is, a function of communicating with the terminal 200. The term "cell" may be used to mean a coverage area of the eNB 111 or the gNB 121. Each cell may be distinguished by a frequency used in each cell. The E-UTRAN 110 and the NG RAN 120 (which may be the eNB 111 or the gNB 121) may be simply called a radio access network or an access network.

The eNB 111, the gNB 121, and the terminal 200 may support a carrier aggregation (CA) using a plurality of component carriers (CC), or may support dual connectivity (DC) in which component carriers are simultaneously transmitted between a plurality of NG-RAN nodes and the terminal 200.

The eNB 111, the gNB 121, and the terminal 200 execute radio communication via a radio bearer. The radio bearer may include a signaling radio bearer (SRB) and a data radio bearer (DRB).

Although not particularly limited, the terminal 200 may be called a "mobile station (MS)" or a "user terminal (UE)". Hereinafter, the terminal 200 will be referred to as the UE 200.

The core network 130 includes an EPC (Evolved Packet Core) according to LTE and a 5G core according to 5G (NR). The EPC includes a network node 131 (for example, MME; Mobility Management Entity) according to LTE. The 5G core includes a network node 132 (for example, AMF (Access and Mobility Management Function)) according to 5G (NR). MME and AMF are network nodes that execute processing related to a control plane. The node may be also referred to as functions.

Here, an interface between the eNB 111 and MME and an interface between the gNB 121 and MME may be referred to as an S1 interface. An interface between the gNB 121 and AMF may be referred to as an NG interface or N2 interface. An interface between the eNB 111 and the eNB 111 and an interface between the eNB 111 and the gNB 121 may be referred to as an X2 interface. An interface between the gNB 121 and the gNB 121 may be referred to as an Xn interface. An interface between MME and AMF may be referred to as an N26 interface.

### (2) Functional block configuration of terminal

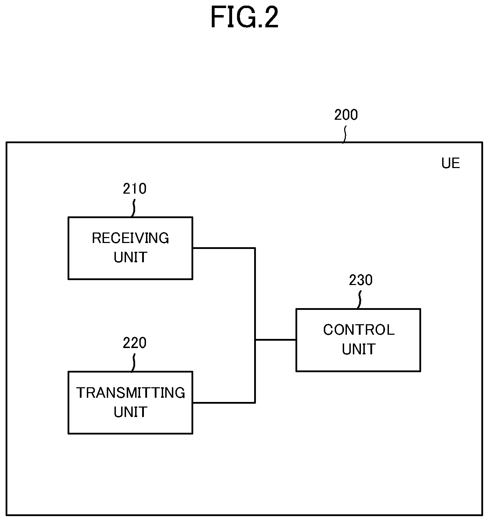

Fig. 2 is a diagram illustrating a functional block configuration of the UE 200 according to the embodiment. As illustrated in Fig. 2, the UE 200 includes a receiving unit 210, a transmitting unit 220, and a control unit 230.

The receiving unit 210 receives various types of information from a network (for example, the eNB 111 or the gNB 121). For example, the receiving unit 210 receives an RRC (Radio Resource Connection) message. The RRC message may include information elements (hereinafter, multiple configured grant configurations) for configuring configuration grants (hereinafter, CGs) for multiple cells in one cell group. The configured CGs may be identified by identification information (hereinafter, ConfiguredGrantIndex). ConfiguredGrantIndex is a unique CG ID for each MAC entity, and may be configured by RRC. The receiving unit 210 receives the information elements via a PDCCH (Physical Downlink Control Channel). The information elements received via the PDCCH include an information element (hereinafter, DCI; Downlink Control Information) that indicates at least any one of activation and release of at least one configured CG. DCI may include an information element that indicates activation of one configured CG (separate activation for each Type 2 CG). DCI may include an information element that indicates release of one activated CG (separate release for each Type 2 CG). The separate release for each Type 2 CG may be called separate deactivation for each Type 2 CG. DCI may include an information element that indicates activation of a plurality of configured CGs (joint activation for each Type 2 CG). DCI may include an information element that indicates release of a plurality of activated CGs (joint release for each Type 2 CG). The joint release for each Type 2 CG may be called joint deactivation for each Type 2 CG. Note that the term "configuring" may be read as "setting". For example, the configured grant may be read as the set grant, and the configured grant confirmation may be read as the set grant confirmation.

The transmitting unit 220 transmits various types of information to the network (for example, eNB 111 or the gNB 121). For example, the transmitting unit 220 transmits the configured grant confirmation in response to receiving DCI via the PDCCH. The configured grant confirmation may include configured grant confirmation that confirms at least any one of activation and release of one CG. The configured grant confirmation may include multiple entry configured grant confirmation that confirms at least any one of activation and release of a plurality of CGs. The transmitting unit 220 transmits PUSCH (Physical Uplink Shared Channel) with the activated CG(s).

Here, the configured CG(s) is a radio resource(s) capable of transmitting PUSCH. The activated CG(s) is radio resource(s) used for the transmission of PUSCH. The separate activation and joint activation may be identified by HPN (HARQ (Hybrid Automatic Repeat Request) Number) included in DCI. The separate release and joint release may be identified by HPN (HARQ (Hybrid Automatic Repeat Request) Number) included in DCI.

The control unit 230 controls an operation of the UE 200. For example, the control unit 230 controls transmission of multiple entry configured grant confirmation. The control unit 230 may control transmission of configured grant confirmation.

### (3) Functional block configuration of base station

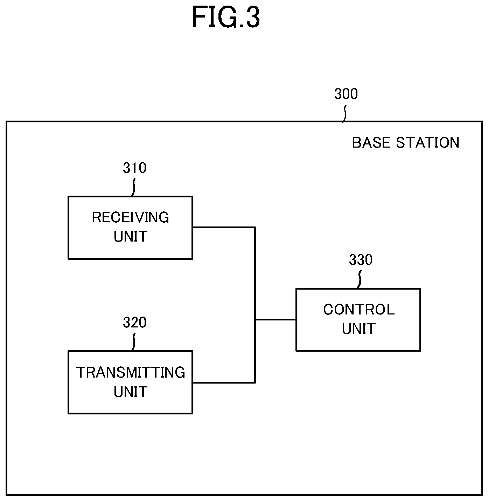

Fig. 3 is a diagram illustrating a functional block configuration of the base station 300 according to the embodiment. In the embodiment, the eNB 111 and the gNB 121 described above may have the same configuration. Therefore, the base station 300 will be described without distinguishing between them. As illustrated in Fig. 3, the base station 300 includes a receiving unit 310, a transmitting unit 320, and a control unit 330.

The receiving unit 310 receives various types of information from the UE 200. For example, the receiving unit 310 receives the above-described configured grant confirmation. The receiving unit 310 receives the above-described PUSCH.

The transmitting unit 320 transmits various types of information to the UE 200. For example, the transmitting unit 320 transmits the above-described RRC message. The transmitting unit 320 transmits the above-described information element via the PDCCH.

The control unit 330 controls an operation of the base station 300. For example, the control unit 330 executes processing to configure configured grants (hereinafter, CGs; Configured Grants) for multiple cells in one cell group.

### (4) Configured grant confirmation

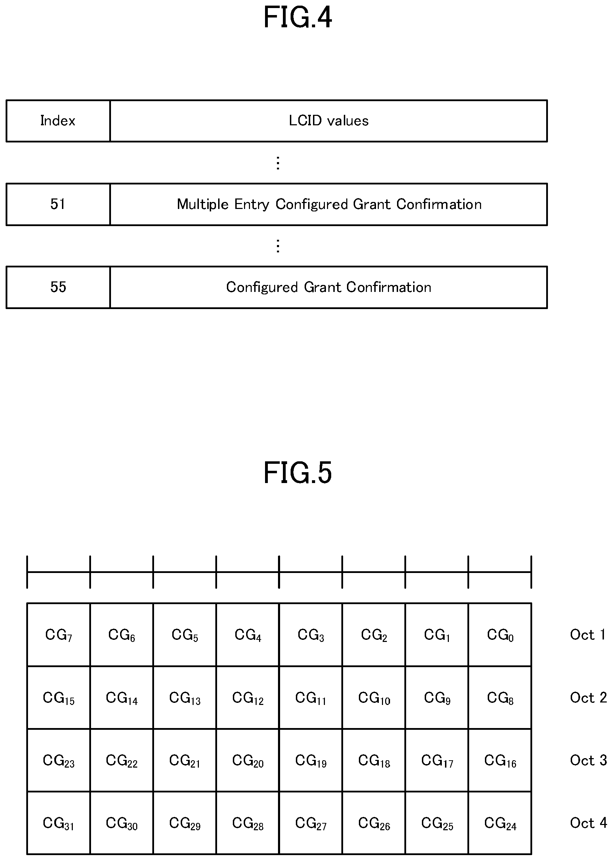

Fig. 4 is a view illustrating an LCID (Logical Channel Identifier) according to the embodiment. As illustrated in Fig. 4, multiple entry configured grant confirmation may be identified by an index of LCID = 51 included in a MAC subheader. The configured grant confirmation may be identified by an index of LCID = 55 included in a MAC subheader.

### (5) Configured grant confirmation

Fig. 5 illustrates the configured grant confirmation according to the embodiment. The configured grant confirmation is configured grant confirmation related to one CG, and thus, the description thereof will be omitted. Here, multiple entry configured grant confirmation will be described.

As illustrated in Fig. 5, the multiple entry configured grant confirmation includes a plurality of CGᵢs. CGi is a field indicating whether or not the PDCCH (DCI) indicates activation or release (may be referred to as deactivation) of CG for which ConfiguredGrantIndex i has been received. When the PDCCH (DCI) indicates the activation or release (may be referred to as deactivation) of CG for which ConfiguredGrantIndex i has bene received, "1" may be set in the CGi field. When the PDCCH (DCI) indicates activation or release (may be referred to as deactivation) of CG for which ConfiguredGrantIndex i has not been received, "0" may be set in the CGi field.

### (6) Operation Example 1

Hereinafter, Operation Example 1 according to the embodiment will be described. Here, separate activation for each Type 2 CG will be described.

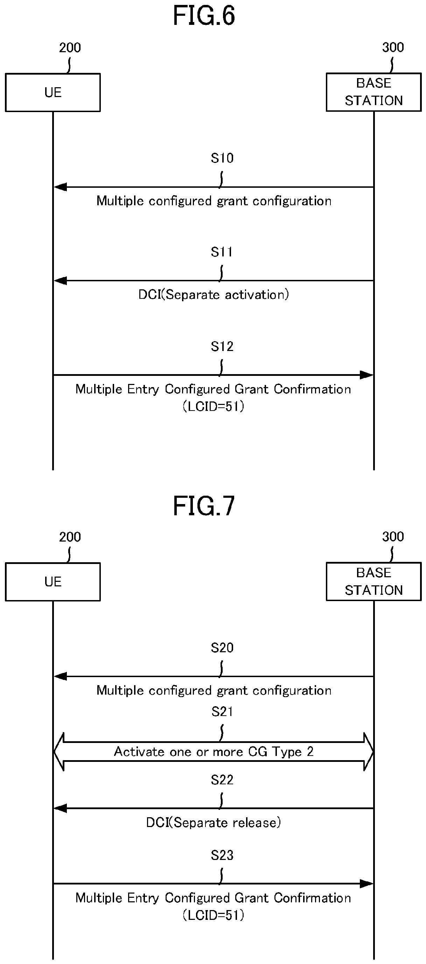

As illustrated in Fig. 6, the base station 300 transmits an RRC message to the UE 200 in Step S10. The RRC message includes multiple configured grant configurations. The UE 200 configures CGs for multiple cells in one cell group.

In Step S11, the base station 300 transmits an information element to the UE 200 via the PDCCH. The information element includes DCI that indicates separate activation.

In Step S12, the UE 200 transmits the multiple entry configured grant confirmation (LCID = 51) illustrated in Fig. 5 to the base station 300.

That is, when a plurality of CGs have been configured, the UE 200 transmits the multiple entry configured grant confirmation (LCID = 51) to the base station 300 even if activation of one CG is indicated.

Although not particularly handled in Fig. 6, the UE 200 may transmit multiple entry configured grant confirmation to the base station 300 when a plurality of CGs are configured and the plurality of CGs are activated. In other words, the UE 200 may transmit configured grant confirmation (LCID = 55) to the base station 300 instead of the multiple entry configured grant confirmation (LCID = 51) when a plurality of CGs are configured but only one CG is activated.

### (7) Operation Example 2

Hereinafter, Operation Example 2 according to the embodiment will be described. Here, separate release for each Type 2 CG will be described.

As illustrated in Fig. 7, in Step S20, the base station 300 transmits an RRC message to the UE 200. The RRC message includes multiple configured grant configurations. The UE 200 configures CGs for multiple cells in one cell group.

In Step S21, at least one or more CG(s) is activated. Since the release of the CG is mainly described in Operation Example 2, a method for activation and transmission of the configured grant confirmation do not matter.

In Step S22, the base station 300 transmits an information element to the UE 200 via the PDCCH. The information element includes DCI that indicates separate release.

In Step S23, the UE 200 transmits the multiple entry configured grant confirmation (LCID = 51) illustrated in Fig. 5 to the base station 300.

That is, when a plurality of CGs have been configured, the UE 200 transmits multiple entry configured grant confirmation (LCID = 51) to the base station 300 even if release of one CG is indicated.

Although not particularly handled in Fig. 7, the UE 200 may transmit multiple entry configured grant confirmation (LCID = 51) to the base station 300 when a plurality of CGs are configured and the plurality of CGs are activated. In other words, the UE 200 may transmit configured grant confirmation (LCID = 55) to the base station 300 instead of the multiple entry configured grant confirmation (LCID = 51) when a plurality of CGs are configured but only one CG is activated.

### (8) Operation and effect

In the embodiment, the UE 200 transmits the multiple entry configured grant confirmation (LCID = 51) when CGs for multiple cells are configured in one cell group. According to such a configuration, a condition for transmission of multiple entry configured grant confirmation (LCID = 51) is clarified when both the configured grant confirmation and the multiple entry configured grant confirmation (LCID = 51) are specified.

### [First Modification]

Hereinafter, a first modification of the embodiment will be described. Hereinafter, a difference from the embodiment will be mainly described. In the first modification, joint activation for each Type 2 CG and joint release for each Type 2 CG will be described.

### (1) Operation Example 1

Hereinafter, Operation Example 1 according to the first modification will be described. Here, joint activation for each Type 2 CG will be described.

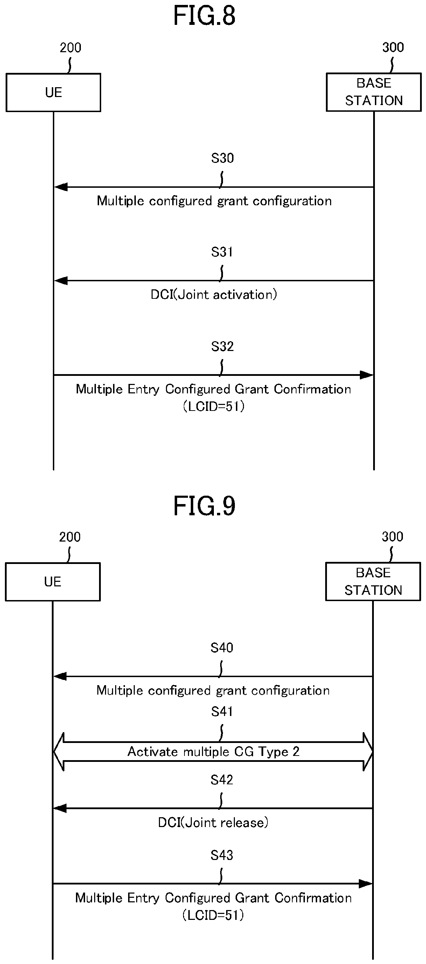

As illustrated in Fig. 8, in Step S30, the base station 300 transmits an RRC message to the UE 200. The RRC message includes multiple configured grant configurations. The UE 200 configures CGs for multiple cells in one cell group.

In Step S31, the base station 300 transmits an information element to the UE 200 via the PDCCH. The information element includes DCI that indicates joint activation.

In Step S32, the UE 200 transmits the multiple entry configured grant confirmation (LCID = 51) illustrated in Fig. 5 to the base station 300.

That is, the UE 200 transmits the multiple entry configured grant confirmation (LCID = 51) to the base station 300 when a plurality of CGs are configured and activation of the plurality of CGs are indicated.

Although not particularly handled in Fig. 8, the first modification may be combined with the above-described embodiment. That is, when a plurality of CGs have been configured, the UE 200 may transmit multiple entry configured grant confirmation (LCID = 51) to the base station 300 even if activation of one CG is indicated or even if activation of the plurality of CGs are indicated.

However, the first modification is not limited thereto. When a plurality of CGs have been configured, the UE 200 may transmit configured grant confirmation (LCID = 55) to the base station 300 if activation of one CG is indicated, and transmit multiple entry configured grant confirmation (LCID = 51) to the base station 300 even if activation of the plurality of CGs are indicated.

### (2) Operation Example 2

Hereinafter, Operation Example 2 according to the first modification will be described. Here, joint release for each Type 2 CG will be described.

As illustrated in Fig. 9, in Step S40, the base station 300 transmits an RRC message to the UE 200. The RRC message includes multiple configured grant configurations. The UE 200 configures CGs for multiple cells in one cell group.

In Step S41, at least two or more CG(s) are activated. Since the release of the CG is mainly described in Operation Example 2, a method for activation and transmission of the configured grant confirmation do not matter.

In Step S42, the base station 300 transmits an information element to the UE 200 via the PDCCH. The information element includes DCI that indicates joint release.

In Step S43, the UE 200 transmits the multiple entry configured grant confirmation (LCID = 51) illustrated in Fig. 5 to the base station 300.

That is, the UE 200 transmits the multiple entry configured grant confirmation (LCID = 51) to the base station 300 when a plurality of CGs are configured and the release of the plurality of CGs are indicated.

Although not particularly handled in Fig. 9, the first modification may be combined with the above-described embodiment. That is, when a plurality of CGs have been configured, the UE 200 may transmit multiple entry configured grant confirmation (LCID = 51) to the base station 300 even if release of one CG is indicated or even if release of the plurality of CGs are indicated.

However, the first modification is not limited thereto. When a plurality of CGs have been configured, the UE 200 may transmit configured grant confirmation (LCID = 55) to the base station 300 if release of one CG is indicated, and transmit multiple entry configured grant confirmation (LCID = 51) to the base station 300 even if release of the plurality of CGs are indicated.

### [Second Modification]

Hereinafter, a second modification of the embodiment will be described. Hereinafter, a difference from the embodiment will be mainly described. In the second modification, a description will be given regarding a case where configured grant confirmation is used for activation of CG(s) and configured grant confirmation is used for release of CG(s).

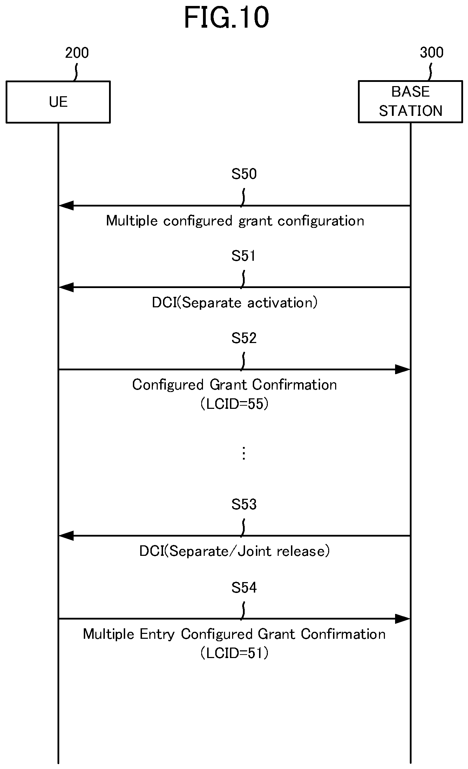

As illustrated in Fig. 10, in Step S50, the base station 300 transmits an RRC message to the UE 200. The RRC message includes multiple configured grant configurations. The UE 200 configures CGs for multiple cells in one cell group.

In Step S51, the base station 300 transmits an information element to the UE 200 via the PDCCH. The information element includes DCI that indicates separate activation.

In Step S52, the UE 200 transmits multiple entry configured grant confirmation (LCID = 51) illustrated in Fig. 5 to the base station 300.

That is, when a plurality of CGs have been configured, the UE 200 transmits configured grant confirmation (LCID = 55) to the base station 300 even if activation of one CG is indicated.

Note that the processing of Steps S51 to S52 may be repeated.

In Step S53, the base station 300 transmits an information element to the UE 200 via the PDCCH. The information element may include DCI that indicates separate release or may include DCI that indicates joint release.

In Step S54, the UE 200 transmits multiple entry configured grant confirmation (LCID = 51) illustrated in Fig. 5 to the base station 300.

That is, when a plurality of CGs have been configured, the UE 200 transmits configured grant confirmation (LCID = 55) to the base station 300 if activation of one CG is indicated, and transmits multiple entry configured grant confirmation (LCID = 51) to the base station 300 if release of one or a plurality of CG(s) is indicated.

### [Third Modification]

Hereinafter, a third modification of the embodiment will be described. Hereinafter, a difference from the embodiment will be mainly described. In the third modification, a description will be given regarding a case in which an information element is received within a predetermined time via two or more PDCCHs. The predetermined time may be defined by one or a plurality of symbols, may be defined by one or a plurality of slots, or may be defined by one or a plurality of sub frames. The predetermined time may be considered to be a reception window of PDCCH.

### (1) Operation Example 1

Hereinafter, Operation Example 1 according to the third modification will be described. Here, separate activation for each Type 2 CG will be described.

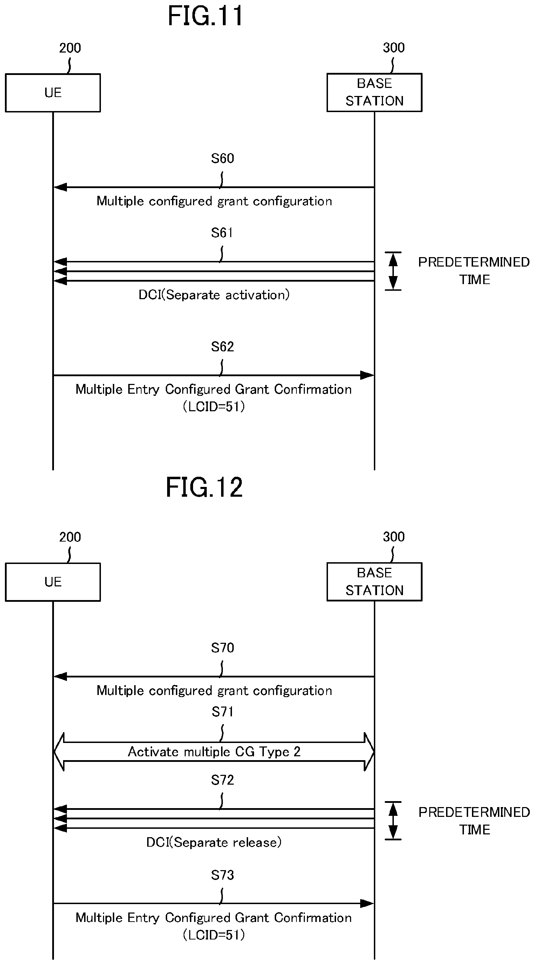

As illustrated in Fig. 11, in Step S60, the base station 300 transmits an RRC message to the UE 200. The RRC message includes multiple configured grant configurations. The UE 200 configures CGs for multiple cells in one cell group.

In Step S61, the base station 300 transmits an information element to the UE 200 via two or more PDCCHs within the predetermined time. Each of the information elements transmitted via the two or more PDCCHs includes DCI that indicates separate activation.

In Step S62, the UE 200 transmits multiple entry configured grant confirmation (LCID = 51) illustrated in Fig. 5 to the base station 300.

That is, the UE 200 transmits the multiple entry configured grant confirmation (LCID = 51) to the base station 300 when a plurality of CGs are configured and activation of two or more CGs is indicated by DCI of two or more PDCCHs received within the predetermined time. In other words, the UE 200 may transmit configured grant confirmation (LCID = 55) to the base station 300 when the plurality of CGs are configured and activation of one CG is indicated by DCI of one PDCCH received within the predetermined time.

### (2) Operation Example 2

Hereinafter, Operation Example 2 according to the third modification will be described. Here, separate release for each Type 2 CG will be described.

As illustrated in Fig. 12, in Step S70, the base station 300 transmits an RRC message to the UE 200. The RRC message includes multiple configured grant configurations. The UE 200 configures CGs for multiple cells in one cell group.

In Step S71, at least one or more CG(s) is activated. Since the release of the CG is mainly described in Operation Example 2, a method for activation and transmission of the configured grant confirmation do not matter.

In Step S72, the base station 300 transmits an information element to the UE 200 via two or more PDCCHs within the predetermined time. Each of the information elements transmitted via two or more PDCCHs includes DCI that indicates separate release.

In Step S73, the UE 200 transmits multiple entry configured grant confirmation (LCID = 51) illustrated in Fig. 5 to the base station 300.

That is, the UE 200 transmits the multiple entry configured grant confirmation (LCID = 51) to the base station 300 when a plurality of CGs are configured and release of two or more CGs is indicated by DCI of two or more PDCCHs received within the predetermined time. In other words, the UE 200 may transmit configured grant confirmation (LCID = 55) to the base station 300 when the plurality of CGs are configured and release of one CG is indicated by DCI of one PDCCH received within the predetermined time.

### [Fourth Modification]

Hereinafter, a fourth modification of the embodiment will be described. Hereinafter, a difference from the embodiment will be mainly described.

In the fourth modification, whether to transmit multiple entry configured grant confirmation (LCID = 51) or configured grant confirmation (LCID = 55) is determined depending on the implementation of the UE 200. In such a case, the base station 300 distinguishes a type of configured grant confirmation received from the UE 200 by referring to LCID.

### [Other Embodiments]

Although the content of the present invention has been described as above according to the embodiment, it is obvious to those skilled in the art that the present invention is not limited to these descriptions and various modifications and improvements can be made.

The block configuration diagrams used for the description of the above embodiment (Figs. 2 and 3) illustrates the blocks in units of functions. Those functional blocks (components) can be implemented by a desired combination of at least one of hardware and software. In addition, a method for implementing each functional block is not particularly limited. That is, each functional block may be implemented by one device combined physically or logically. Alternatively, two or more devices separated physically or logically may be directly or indirectly connected (for example, wired, or wireless) to each other, and each functional block may be implemented by these plural devices. The functional blocks may be implemented by combining software with the one device or the plural devices described above.

Functions include determining, deciding, judging, calculating, computing, processing, deriving, investigating, searching, ascertaining, receiving, transmitting, output, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting to function is called a transmitting unit or a transmitter. An implementation method for any of the above functions is not particularly limited to any one method as described above.

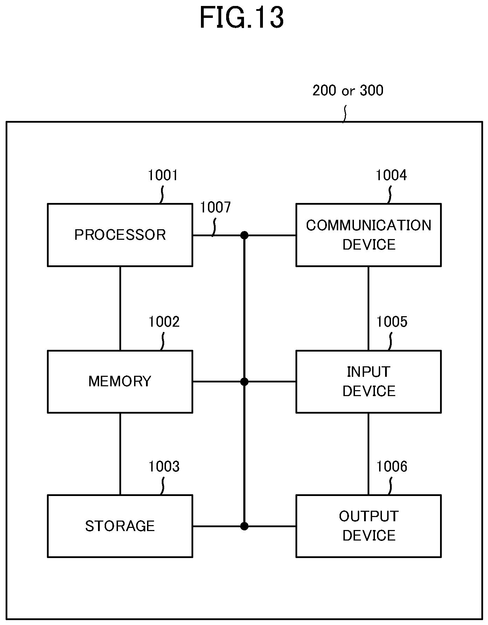

Furthermore, the eNB 111, the gNB 121, and the UE 200 (the device) described above may function as a computer that performs processes of the radio communication method of the present disclosure. Fig. 13 is a diagram illustrating an example of a hardware configuration of the device. As illustrated in Fig. 13, the device can be configured as a computer device including a processor 1001, a memory 1002, a storage 1003, a communication device 1004, an input device 1005, an output device 1006, a bus 1007, and the like.

Note that the term "device" can be replaced with a circuit, device, unit, and the like in the following explanation. The hardware configuration of the device can be configured to include one or a plurality of the devices illustrated in the drawings, or can be configured by without including some of the devices.

The functional blocks of the device (see Fig. 3) can be implemented by any of hardware elements of the computer device or a desired combination of the hardware elements.

Moreover, the processor 1001 performs computing by loading a predetermined software (computer program) on hardware such as the processor 1001 and the memory 1002, and realizes various functions of the device by controlling communication via the communication device 1004, and controlling reading and/or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

In addition, the processor 1001 reads a program (program code), a software module, data, and the like from the storage 1003 and/or the communication device 1004 into the memory 1002, and executes various processes according to the data. As the program, a program that is capable of executing on the computer at least a part of the operation described in the above embodiment is used. Alternatively, various processes described above can be executed by one processor 1001 or can be executed simultaneously or sequentially by two or more processors 1001. The processor 1001 can be implemented using one or more chips. Note that the program can be transmitted from a network via a telecommunication line.

The memory 1002 is a computer-readable recording medium and is configured, for example, using at least one of a read only memory (ROM), an erasable programmable ROM (EPROM), an electrically erasable programmable ROM (EEPROM), a random access memory (RAM), and the like. The memory 1002 can be called a register, a cache, a main memory (main storage device), and the like. The memory 1002 can store therein a program (program codes), software modules, and the like that can execute the method according to the embodiment of the present disclosure.

The storage 1003 is a computer readable recording medium. Examples of the storage 1003 include an optical disk such as a compact disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 may be called an auxiliary storage device. The recording medium can be, for example, a database including the memory 1002 and/or the storage 1003, a server, or other appropriate medium.

The communication device 1004 is hardware (transmission/reception device) capable of performing communication between computers via at least one of a wired network and a wireless network. The communication device 1004 is also called, for example, a network device, a network controller, a network card, a communication module, and the like.

The communication device 1004 includes a high-frequency switch, a duplexer, a filter, a frequency synthesizer, and the like in order to implement, for example, at least one of Frequency Division Duplex (FDD) and Time Division Duplex (TDD).

The input device 1005 is an input device (for example, a keyboard, a mouse, a microphone, a switch, a button, a sensor, and the like) that receives input from the outside. The output device 1006 is an output device (for example, a display, a speaker, an LED lamp, and the like) that outputs data to the outside. Note that the input device 1005 and the output device 1006 may be integrated (for example, a touch screen).

In addition, the respective devices, such as the processor 1001 and the memory 1002, are connected to each other with the bus 1007 for communicating information thereamong. The bus 1007 can be configured using a single bus or can be configured using separate buses between the devices.

In addition, the device may be configured to include hardware such as a microprocessor, a digital signal processor (DSP), an application specific integrated circuit (ASIC), a programmable logic device (PLD), and a field programmable gate array (FPGA). Some or all of the functional blocks may be implemented by the hardware. For example, the processor 1001 may be implemented by using at least one of these kinds of hardware.

In addition, notification of information is not limited to that described in the above aspect/embodiment, and may be performed using a different method. For example, the notification of information may be performed by physical layer signaling (for example, downlink control information (DCI), uplink control information (UCI), upper layer signaling (for example, RRC signaling, medium access control (MAC) signaling, broadcasting information (master information block (MIB), system information block (SIB)), other signals, or a combination of these. In addition, the RRC signaling may be called an RRC message, for example, or can be an RRC connection setup message, an RRC connection reconfiguration message, or the like.

Each of the aspects/embodiments described in the present disclosure can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system using any other appropriate system, and a next-generation system that is expanded based on these. In addition, a plurality of systems may be combined (for example, a combination of at least one of the LTE and the LTE-A with the 5G).

As long as there is no inconsistency, the order of processing procedures, sequences, flowcharts, and the like of each of the aspects/embodiments described in the present disclosure may be exchanged. For example, the various steps and the sequence of the steps of the methods described above are exemplary and are not limited to the specific order described above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above description, the example in which there is one network node other than the base station has been described; however, a combination of a plurality of other network nodes (for example, MME and S-GW) may be used.

Information and signals (information and the like) can be output from an upper layer (or lower layer) to a lower layer (or upper layer). The information may be input and output via a plurality of network nodes.

The input/output information can be stored in a specific location (for example, a memory) or can be managed in a management table. The information to be input/output can be overwritten, updated, or added. The information can be deleted after outputting. The input information can be transmitted to another device.

The determination may be made using a value (0 or 1) represented by one bit, using Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, but may be performed implicitly (for example, without notifying the predetermined information).

Regardless of being called software, firmware, middleware, a microcode, a hardware description language, or some other name, the software should be interpreted broadly to mean an instruction, an instruction set, a code, a code segment, a program code, a program, a subprogram, a software module, an application, a software application, a software package, a routine, a subroutine, an object, an executable file, an execution thread, a procedure, a function, and the like.

In addition, software, an instruction, information, and the like may be transmitted and received via a transmission medium. For example, when software is transmitted from a website, a server, or some other remote sources using at least one of a wired technology (coaxial cable, optical fiber cable, twisted pair, digital subscriber line (DSL), or the like) and a wireless technology (infrared light, microwave, or the like), at least one of these wired and wireless technologies is included within the definition of the transmission medium.

The information, signals, or the like described above may be represented by using any of a variety of different technologies. For example, data, an instruction, a command, information, a signal, a bit, a symbol, a chip, or the like that can be described throughout the above description may be represented by a voltage, a current, an electromagnetic wave, a magnetic field or a magnetic particle, an optical field or a photon, or a desired combination thereof.

Note that the terms described in the present disclosure and terms necessary for understanding the present disclosure may be replaced by terms having the same or similar meanings. For example, at least one of a channel and a symbol may be a signal (signaling). In addition, the signal may be a message. In addition, a component carrier (Component Carrier: CC) may be called a carrier frequency, a cell, a frequency carrier, or the like.

The terms "system" and "network" used in the present disclosure can be used interchangeably.

In addition, the information, the parameter, and the like described in the present disclosure can be represented by an absolute value, can be expressed as a relative value from a predetermined value, or can be represented by corresponding other information. For example, the radio resource can be instructed by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal", and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable terms.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). Note that at least one of a base station and a mobile station can be a device that does not necessarily move during the communication operation. For example, at least one of a base station and a mobile station may be an Internet of Things (IoT) device such as a sensor.

In addition, a base station in the present disclosure may be read as a mobile station (user terminal, hereinafter the same). For example, each of the aspects/embodiments of the present disclosure may be applied to a configuration that allows communication between a base station and a mobile station to be replaced with communication among a plurality of mobile stations (for example, may be called Device-to-Device (D2D), Vehicle-to-Everything (V2X), or the like). In this case, the mobile station may have the function of the base station. In addition, the terms "uplink", "downlink" and the like may also be replaced with terms corresponding to inter-terminal communication (for example, "side"). For example, terms such as an uplink channel, and a downlink channel may be read as a side channel.

Likewise, a mobile station in the present disclosure may be read as a base station. In this case, the base station may have the function of the mobile station.

A radio frame may be constituted by one or a plurality of frames in a time domain. The one frame or each frame of the plurality of frames in the time domain may be called a sub frame.

A sub frame may also be constituted by one or a plurality of slots in the time domain. The subframe may have a fixed time length (for example, 1 ms) that does not depend on numerology.

The numerology may be a communication parameter applied to at least one of transmission and reception of a certain signal or channel. The numerology may represent at least one of, for example, a subcarrier spacing (SCS), a bandwidth, a symbol length, a cyclic prefix length, a transmission time interval (TTI), the number of symbols per TTI, a radio frame configuration, a specific filtering process performed by the transceiver in the frequency domain, a specific windowing process performed by the transceiver in the time domain, and the like.

The slot may be constituted by one or a plurality of symbols (such as orthogonal frequency division multiplexing (OFDM)) symbols and single carrier frequency division multiple access (SC-FDMA) symbols) in the time domain. The slot may be a time unit based on the numerology.

The slot may include a plurality of mini-slots. Each mini-slot may be constituted by one or a plurality of symbols in the time domain. In addition, the mini-slot may also be called a sub-slot. The mini-slot may be constituted by fewer symbols than the slot. PDSCH (or PUSCH) transmitted in a time unit greater than the mini-slot may be called PDSCH (or PUSCH) mapping type A. The PDSCH (or PUSCH) transmitted using the mini-slot may be called PDSCH (or PUSCH) mapping type B.

All of the radio frame, the subframe, the slot, the mini-slot, and the symbol represent a time unit at the time of transmitting a signal. All of the radio frame, the subframe, the slot, the mini-slot, and the symbol may have different names corresponding to them.

For example, one sub frame may be called a transmission time interval (TTI), a plurality of consecutive sub frames may be called TTI, and one slot or one mini-slot may be called TTI. That is, at least one of the subframe and TTI may be a subframe (1 ms) in the existing LTE, may be a period shorter than 1 ms (for example, 1 to 13 symbols), or may be longer than 1 ms. Note that the unit representing TTI may be called a slot, a mini-slot, and the like instead of a subframe.

Here, TTI refers to, for example, a minimum time unit of scheduling in radio communication. For example, in the LTE system, the base station performs scheduling to allocate radio resources (frequency bandwidths, transmission power, and the like that can be used by each user terminal) to each user terminal in units of TTI. Note that the definition of TTI is not limited thereto.

TTI may be a transmission time unit such as a channel-encoded data packet (transport block), a code block, and a codeword, and may be a processing unit such as scheduling and link adaptation. Note that, when TTI is given, a time interval (for example, the number of symbols) at which a transport block, a code block, a codeword, and the like are actually mapped may be shorter than the TTI.

Note that, when one slot or one mini-slot is called TTI, one or more TTIs (that is, one or more slots or one or more mini-slots) may be the minimum time unit for scheduling. In addition, the number of slots (the number of mini-slots) constituting the minimum time unit of the scheduling may be controlled.

TTI having a time length of 1 ms may be called a general TTI (TTI in LTE Rel. 8-12), a normal TTI, a long TTI, a general subframe, a normal subframe, a long subframe, a slot, and the like. The TTI shorter than the general TTI may be called a shortened TTI, a short TTI, a partial TTI (partial or fractional TTI), a shortened sub frame, a short sub frame, a mini-slot, a sub-slot, a slot, and the like.

Note that a long TTI (for example, a general TTI, a subframe, and the like) may be replaced with TTI having a time length exceeding 1 ms, and a short TTI (for example, a shortened TTI) may be read as a TTI having a TTI length that is shorter than the long TTI and 1 ms or more.

A resource block (RB) is a resource allocation unit in the time domain and the frequency domain, and may include one or a plurality of consecutive subcarriers in the frequency domain. The number of subcarriers included in the RB may be the same regardless of the numerology, and may be twelve, for example. The number of subcarriers included in RB may be decided based on the numerology.

In addition, a time domain of RB may include one or a plurality of symbols, and may be one slot, one mini-slot, one sub frame, or one TTI in length. One TTI, one sub frame, and the like may be constituted by one or a plurality of resource blocks.

Note that one or a plurality of RBs may be called a physical resource block (Physical RB: PRB), a sub-carrier group (SCG), a resource element group (REG), a PRB pair, an RB pair, and the like.

In addition, the resource block may be constituted by one or a plurality of resource elements (RE). For example, one RE may be a radio resource area of one subcarrier and one symbol.

A bandwidth part (BWP) (may also be called a partial bandwidth) may represent a subset of consecutive common RBs (common resource blocks) for a certain numerology in a certain carrier. Here, the common RB may be specified by an index of RB based on a common reference point of the carrier. The PRB may be defined in a BWP and numbered within the BWP.

The BWP may include a BWP for UL (UL BWP) and a BWP for DL (DL BWP). For UE, one or more BWPs may be configured in one carrier.

At least one of the configured BWPs may be active, and UE does not necessarily assume transmission/reception of a predetermined signal/channel outside the active BWP. Note that "cell", "carrier", and the like in the present disclosure may be read as "BWP".

The structures of the radio frame, the subframe, the slot, the mini-slot, the symbol, and the like described above are merely examples. For example, the configurations such as the number of sub frames included in the radio frame, the number of slots per sub frame or radio frame, the number of mini-slots included in the slot, the number of symbols and RBs included in the slot or mini-slot, the number of subcarriers included in the RB, the number of symbols in the TTI, the symbol length, and the cyclic prefix (CP) length can be variously changed.

The terms "connected", "coupled", or any variations thereof, mean any direct or indirect connection or coupling between two or more elements. In addition, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using at least one of one or more wires, cables, printed electrical connections, and as some non-limiting and non-exhaustive examples, by using electromagnetic energy having wavelengths in the radio frequency domain, the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each of the above devices may be replaced with "unit", "circuit", "device", and the like.

Any reference to an element using a designation such as "first", "second", and the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

In the present disclosure, for example, during translation, if articles such as "a", "an", and "the" in English are added, in the present disclosure, these articles shall include plurality of nouns following these articles.

The terms "determining" and "determining" used in the present disclosure sometimes encompass a wide variety of operations. For example, "determining" and "deciding" can include judging, calculating, computing, processing, deriving, investigating, looking up, search, or inquiry (for example, search in a table, a database, or another data structure), and ascertaining which are considered as "determining" or "deciding". In addition, "determining" and "deciding" can include receiving (for example, receiving information), transmitting (for example, transmitting information), "input", "output", and "accessing" (for example, accessing data in a memory) which are considered as "determining" or "deciding". In addition, "determining" and "deciding" can include resolving, selecting, choosing, establishing, and comparing which are considered as "determining" or "deciding". That is, the "determining" and "deciding" can include any operation considered as "determining" or "deciding". In addition, "determining (deciding)" may be read as "assuming", "expecting", "considering", and the like.

In the present disclosure, the term "A and B are different" may mean "A and B are different from each other". Note that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

- 100: Radio communication system
- 110: E-UTRAN
- 111: eNB
- 120: NG RAN
- 121: gNB 121
- 130: Core network
- 200: UE
- 210: Receiving unit
- 220: Transmitting unit
- 230: Control unit
- 300: Base station
- 310: Receiving unit
- 320: Transmitting unit
- 330: Control unit
- 400: Upper node
- 1001: Processor
- 1002: Memory
- 1003: Storage
- 1004: Communication device
- 1005: Input device
- 1006: Output device
- 1007: Bus

## Claims

1. A terminal comprising:
a receiving unit that receives an information element that indicates at least any one of activation and release of at least one configured grant via a physical downlink control channel when configured grants for multiple cells are configured in one cell group; and
a transmitting unit that transmits configured grant confirmation for multiple cells in response to receiving the information element via the physical downlink control channel.

2. The terminal according to claim 1, wherein
the transmitting unit transmits the configured grant confirmation for the multiple cells when the information element indicates at least any one of activation and release of one configured grant.

3. The terminal according to claim 1 or 2, wherein
the transmitting unit transmits the configured grant confirmation for the multiple cells when the information element indicates at least any one of activation and release of a plurality of configured grants.

4. The terminal according to any one of claims 1 to 3,
wherein the transmitting unit transmits the configured grant confirmation for the multiple cells when receiving the information element via two or more physical downlink control channels each serving as the physical downlink control channel within a predetermined time.

5. A radio communication method comprising:
a step of receiving an information element that indicates at least any one of activation and release of at least one granted configuration via a physical downlink control channel when configured grants for multiple cells are configured in one cell group; and
a step of transmitting configured grant confirmation for multiple cells in response to receiving the information element via the physical downlink control channel.
